Europäisches Patentamt

European Patent Office

Office européen des brevets

(11) Numéro de publication: **0 014 624**

**A1**

(12) **DEMANDE DE BREVET EUROPEEN**

(21) Numéro de dépôt: **80400114.7**

(22) Date de dépôt: **23.01.80**

(51) Int. Cl.³: **G 01 J 5/00**

(30) Priorité: **23.01.79 FR 7901664**

(43) Date de publication de la demande:
**20.08.80 Bulletin 80/17**

(84) Etats Contractants Désignés:
**AT BE CH DE GB IT LU NL SE**

(71) Demandeur: **I.R.tec.**
**35, rue du Tonkin**
**F-69100 Villeurbanne(FR)**

(72) Inventeur: **Corbier, Robert**
**1, rue Vendôme**
**F-69006 Lyon(FR)**

(72) Inventeur: **Arnaud, Robert**
**6, Les Engoulevents**
**F-78170 La Celle St Cloud(FR)**

(74) Mandataire: **Lecca, Jean et al,**
**CABINET PLASSERAUD 84, rue d'Amsterdam**
**F-75009 Paris(FR)**

(54) **Procédé et dispositif pour la mesure, par thermométrie infrarouge, de la température d'un fil, d'une barre, d'un tube ou d'une tôle.**

(57) On réalise la mesure de la température d'un corpos 1, tel qu'un fil, barre ou tube, ou d'une tôle, par rapport au fond noir 2a, en prévoyant soit un miroir oscillant 6, soit deux miroirs plans 6a et 6b, et soit un miroir sphérique concave 8 associé au miroir plan oscillant, soit deux miroirs sphériques conca- ves 8a et 8b associés aux deux miroirs plans, ainsi qu'un détecteur 11 de rayonnement infrarouge dont l'élément sen- sible 10 reçoit alternativement et successivement, par renvoi sur le ou les miroirs plans et collection par le ou les miroirs sphériques, d'une part, le rayonnement infrarouge du fil 1 et du fond noir qui l'entoure et, d'autre part, du seul fond noir 2a.

EP 0 014 624 A1

.../...

Fig.13.

PROCEDE ET DISPOSITIF POUR LA MESURE, PAR THERMOMETRIE
INFRAROUGE, DE LA TEMPERATURE D'UN FIL, BARRE OU TUBE,
OU D'UNE TOLE

La présente invention concerne l'application de la
thermométrie infrarouge à la mesure de la température de
fils, barres ou tubes et de tôles pouvant se déplacer dans
le sens de leur longueur (ci-après on utilisera le mot "fil"
pour désigner aussi les barres et tubes).

Elle s'applique également au contrôle de cette température en mettant en oeuvre une telle mesure.

Le brevet français 2.109.406, déposé le 15 octobre 1970
par les Laboratoires d'Electronique et de Physique Appliquée
(LEP), et dont la délivrance a été publiée le 26 mai 1972,
décrit un procédé et un dispositif de mesure de la température de fils, dénommés corps cylindriques longilignes dans
le brevet, en mouvement suivant leur longueur, dans lesquels
on fait défiler le fil, dont on veut mesurer la température,
devant un fond noir à température uniforme et on focalise,
sur l'élément sensible d'un détecteur infrarouge, un faisceau parallèle émis par l'ensemble du fond noir et dudit fil,
le signal de sortie du détecteur étant représentatif de la
température dudit fil et sensiblement indépendant du déplacement du fil relativement au fond noir. La focalisation est
assurée au moyen d'un miroir plan oscillant et d'une lentille
transparente à l'infrarouge.

Si la mise en oeuvre d'un faisceau parallèle explorant
le fil et le fond noir par le miroir oscillant présente
l'avantage d'assurer une mesure de la température indépendante de la position du fil par rapport au fond noir, le
dispositif du brevet 2.109.406 présente l'inconvénient de
limiter considérablement le rendement optique du système étant
donné qu'une très faible proportion des rayons infrarouges,
à savoir ceux qui sont sensiblement parallèles à l'axe optique du
système, sont focalisés sur l'élément sensible du détecteur et sont
donc convertis en signal électrique utilisable, ce signal s'annulant
d'ailleurs de préférence lorsque la température du fil est
identique à celle du fond noir par mise en oeuvre d'une mesure différentielle entre l'émission du fond noir seul et du fond noir sur lequel se superpose une fraction du fil.

La présente invention vise à perfectionner le procédé et le dispositif selon le brevet précité en mettant en oeuvre une fraction bien plus importante des rayons infrarouges issus du fil et du fond noir. A cet effet, au lieu de focaliser par une lentille uniquement les rayons infrarouges sensiblement parallèles à l'axe optique réfléchis par au moins un miroir plan, on collecte une partie bien plus notable du rayonnement infrarouge émis par le fond noir et le fil ou une tranche de la tôle, dont on veut mesurer la température, par exemple au moyen d'au moins un miroir sphérique concave.

L'invention a donc pour objet un procédé pour la mesure, par thermométrie infrarouge, de la température d'un fil ou d'une tôle en déplacement suivant sa longueur devant un fond noir à température constante, suivant lequel on collecte et applique sur l'élément sensible d'un détecteur infrarouge, pendant certaines périodes de temps, sensiblement l'ensemble du rayonnement infrarouge émis par une portion dudit fil ou tôle suivant un angle solide déterminé.

L'invention a également pour objet un dispositif pour la mise en oeuvre de ce procédé, ce dispositif comprerant au moins un miroir plan oscillant, qui renvoie dans une certaine direction l'ensemble du rayonnement infrarouge émis par une portion dudit fil ou tôle et le fond noir suivant un angle solide déterminé, et au moins un miroir sphérique concave, qui collecte le faisceau infrarouge renvoyé par ledit miroir plan oscillant et dirige ce faisceau ainsi collecté sur ledit élément sensible.

On pourrait croire a priori que le fait de ne pas se limiter aux rayons infrarouges sensiblement parallèles à l'axe optique émis par la portion examinée du fil ou tôle et le fond noir environnant augmenterait l'influence, sur la mesure, des deplacements du fil ou tôle. Or on a constaté toutefois - et on donnera des indications chiffrées à ce sujet dans la description détaillée qui va suivre - que cette influence est réduite si l'on s'arrange pour que le fil ou tôle oscille autour d'une position d'équilibre et si l'on prévoit des moyens d'intégration du signal émis par le détecteur de

3                                    0014624

rayonnement infrarouge afin d'avoir une réponse statistique dans laquelle les fluctuations dues au déplacement du fil ou tôle se compensent.

Plus particulièrement l'invention a pour objet :

- un procédé pour la mesure, par thermométrie infrarouge, de la température d'un corps présentant, au moins dans une direction, une dimension faible, tel qu'un fil ou une tôle, même en mouvement suivant sa longueur, devant un fond noir, notamment la différence entre la température de ce corps et celle du fond noir, ledit procédé consistant à envoyer sur l'élément sensible d'un détecteur infrarouge, alternativement et successivement, d'une part, au moins une partie du rayonnement infrarouge total émis ou réfléchi par une portion de longueur dudit corps et émis par une zone du fond noir qui entoure ladite portion, et, d'autre part, au moins une partie correspondante du rayonnement infrarouge total émis uniquement par ladite zone, ou une zone équivalente, dudit fond noir, sans intervention dudit corps, et à mesurer la différence d'intensité entre ces deux parties en mesurant la différence entre les signaux de sortie correspondants dudit élément sensible, et étant caractérisé en ce que l'on collecte sur ledit élément sensible sensiblement le rayonnement infrarouge total émis ou réfléchi dans un angle solide déterminé par ladite portion dudit corps et ladite zone du fond, et, alternativement et successivement, sensiblement le rayonnement infrarouge total émis dans un même angle solide uniquement par ladite zone, ou une zone équivalente, dudit fond noir, sans intervention dudit corps;

- un dispositif pour la mise en oeuvre du procédé précité, caractérisé en ce qu'il comprend -- en combinaison avec au moins un miroir plan apte à réfléchir, alternativement et successivement, d'une part, au moins une partie du rayonnement infrarouge total émis ou réfléchi par une portion de longueur dudit corps et émis par une zone du fond noir qui entoure ladite portion et, d'autre part, au moins une partie correspondante du rayonnement infrarouge total émis uniquement par ladite zone, ou une zone équivalente, dudit fond noir, sans intervention dudit corps et avec des moyens aptes à mesurer la différence d'intensité entre ces deux parties

4               0014624

en mesurant la différence entre les signaux de sortie correspondants dudit élément sensible -- des moyens pour collecter sur ledit élément sensible sensiblement le rayonnement infrarouge total émis ou réfléchi dans un angle solide déterminé par ladite portion dudit corps et ladite zone du fond et, alternativement et successivement, sensiblement le rayonnement infrarouge total émis dans un même angle solide uniquement par ladite zone ou une zone équivalente,dudit fond noir, sans intervention dudit corps.

Suivant un premier type de modes de réalisation :

- le procédé est en outre caractérisé en ce qu'on réalise l'envoi des rayonnements infrarouges totaux, d'une manière alternative et successive, au moyen d'un miroir plan oscillant et la collecte de ces rayonnements au moyen d'un miroir sphérique concave fixe;

- le dispositif est en outre caractérisé en ce que ledit au moins un miroir est constitué par un miroir plan oscillant et en ce que lesdits moyens pour collecter les rayonnements infrarouges sont constitués par un miroir sphérique concave.

Suivant un second type de modes de réalisation :

- le procédé est en outre caractérisé en ce qu'on réalise le renvoi des rayonnements infrarouges au moyen de deux miroirs plans fixes et la collection des rayonnements infrarouges, renvoyés par les miroirs plans, au moyen de deux miroirs sphériques concaves, chaque miroir sphérique étant associé à un miroir plan,et on interrompt alternativement et successivement, d'une part, le rayonnement infrarouge total émis ou réfléchi par une portion de longueur dudit corps et émis par une zone du fond noir qui entoure ladite portion et réfléchi par un desdits miroirs plans fixes et par un desdits miroirs concaves, et, d'autre part, le rayonnement infrarouge total émis uniquement par ladite zone, ou une zone équivalente, dudit fond noir, sans intervention dudit corps,et réfléchi par l'autre miroir plan et l'autre miroir sphérique;

- le dispositif est en outre caractérisé en ce que ledit au moins un miroir plan est constitué par deux miroirs plans fixes, en ce que lesdits moyens pour collecter les rayonnements infrarouges totaux sont constitués par deux miroirs sphériques concaves, chaque miroir sphérique concave étant associé à un miroir plan, et en ce qu'on prévoit des moyens pour intercepter alternativement et successivement, d'une part, le rayonnement infrarouge total émis ou réfléchi par une portion de longueur dudit corps et émis par une zone du fond noir qui entoure ladite portion et réfléchi par un desdits miroirs plans fixes et par un desdits miroirs concaves, et, d'autre part, le rayonnement infrarouge total émis uniquement par ladite zone, ou une zone équivalente, dudit fond noir, sans intervention dudit corps, et réfléchi par l'autre miroir plan et l'autre miroir sphérique.

Etant donné que, de préférence, on doit prévoir une grande sensibilité de la mesure lorsque la température, à mesurer, de fil ou tôle est égale ou voisine de celle du fond noir, il est recommandé de réduire au minimum le bruit engendré dans ledit détecteur et le préamplificateur dans lequel débite ce détecteur.

A cet effet, et conformément à une caractéristique supplémentaire de l'invention mise en oeuvre de préférence en même temps que la caractéristique principale de l'invention indiquée ci-dessus, on prévoit, dans la partie électronique du dispositif dans laquelle débite ledit détecteur, des moyens pour rendre symétrique, par rapport au potentiel de référence, la tension issue du détecteur, des moyens pour permettre une détection de crête positive ou négative, suivant que respectivement le fil ou tôle est plus chaud ou plus froid que le fond noir ou inversement, des moyens pour détecter lesdites tensions de crête positives et négatives et des moyens pour déterminer la somme algébrique de ces tensions de crête positives et négatives ainsi détectées.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 représente schématiquement, avec coupe partielle, l'ensemble d'un mode de réalisation du dispositif selon l'invention pour mesurer la température d'un fil, à l'exception de la partie électronique.

9014624

Les figures 2 à 7 illustrent les signaux électriques mis en oeuvre dans ce mode de réalisation.

La figure 8 représente la partie électronique de ce mode de réalisation.

Les figures 9 et 10 illustrent des signaux électriques mis en oeuvre dans le montage de la figure 8.

La figure 11 est analogue à la figure 1, mais elle concerne la mesure de la température d'une tôle.

La figure 12 illustre la portion mécanique du dispositif des figures 1 et 11.

La figure 13 représente schématiquement, avec coupe partielle, un autre mode de réalisation d'un dispositif doté des perfectionnements selon l'invention, adapté spécialement à la mesure de la température d'un tube ou d'une barre.

La figure 14 représente, vus en plan, les moyens pour réaliser l'envoi alternatif et successif des deux rayonnements infrarouges sur l'élément sensible dans le mode de réalisation de la figure 13.

Les figures 15 et 16 représentent, suivant deux plans perpendiculaires entre eux, les moyens optiques mis en oeuvre dans le dispositif de la figure 13.

La figure 17, enfin, représente schématiquement l'ensemble mécanique du dispositif de la figure 13.

Selon l'invention, se proposant de réaliser un procédé et un dispositif pour la mesure, par thermométrie infrarouge, de la température d'un fil ou d'une tôle, on s'y prend comme suit ou d'une manière analogue.

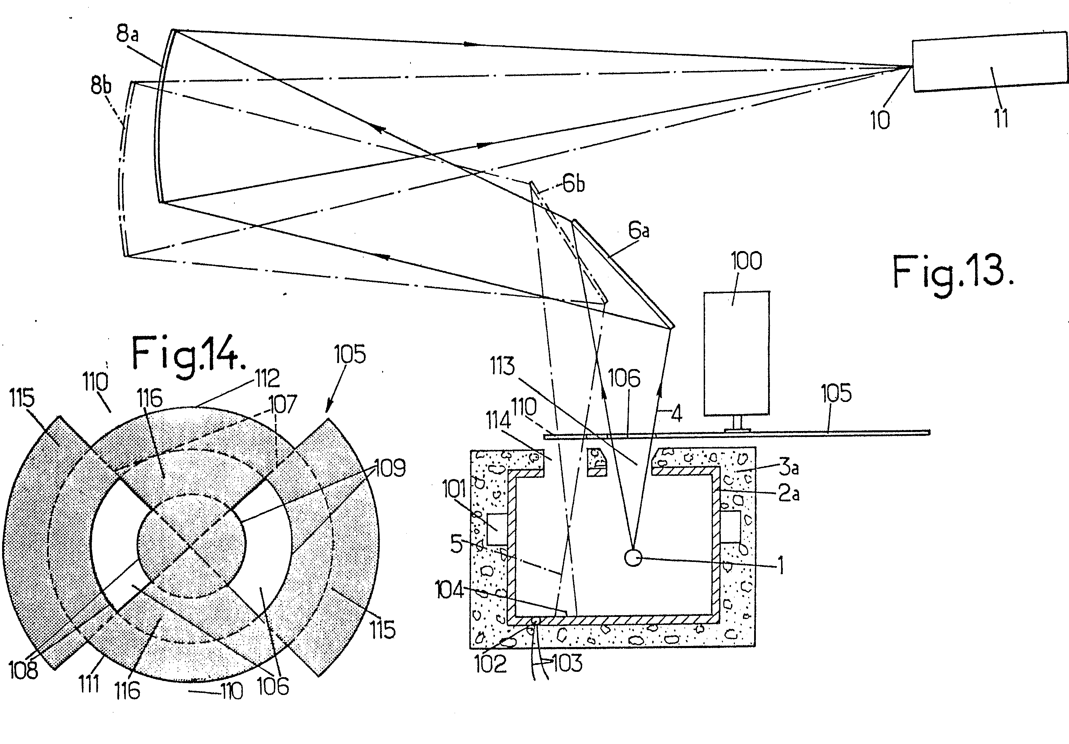

Dans ce qui suit on se limitera en général au cas d'un fil, mais il est bien entendu que les explications qui vont suivre s'appliquent également au cas d'une tôle et également (notamment pour les figures 13 à 17) au cas d'un tube ou d'une barre.

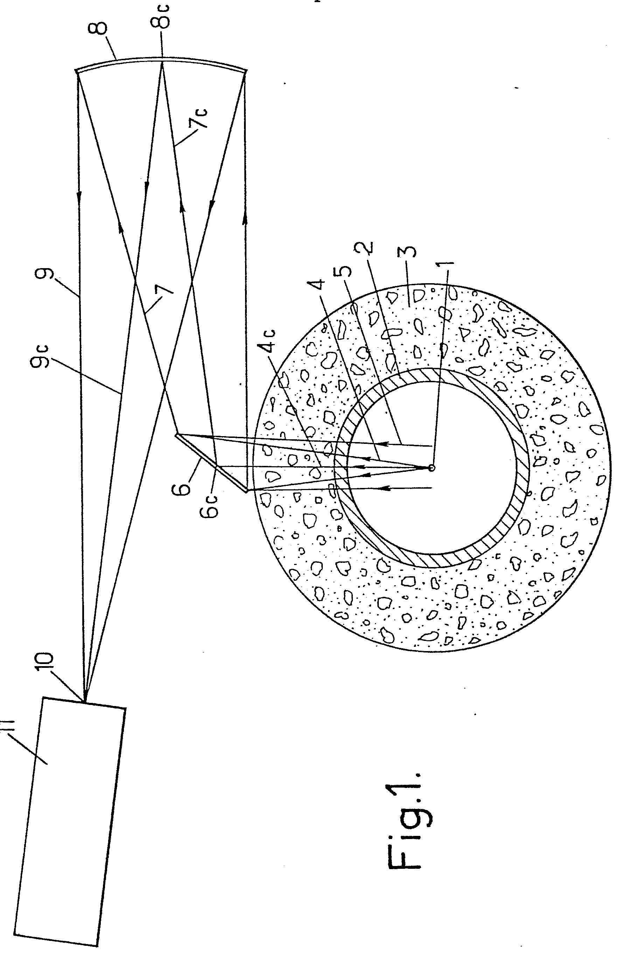

Référence est tout d'abord faite à la figure 1, sur laquelle, pour simplifier, on n'a pas illustré l'ouverture permettant le passage du rayonnement infrarouge, on voit qu'on a représenté en 1 le fil dont on veut déterminer la température et qui se trouve entouré par un corps ou un fond noir 2 constitué par exemple par un tube en graphite ou en un matériau obtenu par frittage dit "pyrox" de pouvoir émissif élevé. Une enveloppe isolante cylindrique 3, réalisée en fibre de verre, entoure le corps noir 2. L'ensemble des rayons infrarouges 4 émis par le fil 1 et des rayons infrarouges 5 émis par le corps noir sont renvoyés, pendant certaines périodes de temps, par un miroir plan oscillant 6 en tant que rayon 7 sur un miroir 8.

Conformément à la caractéristique principale de l'invention, il s'agit là d'un miroir sphérique concave qui collecte finalement, après réflexion sur le miroir oscillant 6 (lorsqu'il se trouve dans la position illustrée sur la figure 1) l'ensemble des rayons émis par le fil 1 et la région du corps noir qui l'entoure et non pas seulement les rayons sensiblement parallèles à l'axe optique qui correspond au rayon axial 4c qui se réfléchit en 7c sur le miroir oscillant 6 dans la position de celui-ci représentée sur la figure 1.

Le miroir sphérique 8 renvoie les rayons 7, en tant que rayons 9, sur l'élément sensible 10 du détecteur 11 de rayonnement infrarouge. On notera que le rayon axial 7c se réfléchit sur le miroir 8 en tant que rayon axial 9c et que le miroir sphérique 8 a son axe décalé par rapport à l'axe du rayonnement infrarouge 7c ; il s'agit donc d'un miroir sphérique "off axis".

. L'avantage du système qui vient d'être décrit avec référence à la figure 1 est d'avoir un très bon rendement si on le compare à celui d'un système n'utilisant que les rayons infrarouges émis par le fil 1 et le fond noir environnant dans une direction sensiblement parallèle à l'axe optique 4c. Ceci peut être montré dans le cas d'un exemple de mode de réalisation particulier correspondant à la figure 1. Dans ce mode de réalisation, le miroir sphérique peut avoir un rayon de 75 mm, une ouverture dont le diamètre est de 40 mm et un grandissement de 1, la distance entre le fil et le miroir oscillant étant de 53 mm, tandis que la distance entre le centre 6c du miroir oscillant et le centre 8c du miroir sphérique est de 97 mm. L'inclinaison du rayon moyen par rapport à l'axe du miroir est de 7° et

0014624

l'angle solide sous lequel est vu le fil est égal à $5,56.10^{-2}$ stéradian.

En prenant comme fenêtre du détecteur 11, c'est-à-dire pour l'élément sensible, une surface carrée de 2 mm de côté, c'est une portion de 2 mm de longueur de fil (dans la direction perpendiculaire au plan de la figure 1) qui apparaît sur la surface sensible. En supposant que le fil a un diamètre de 1 mm. le rapport surface du fil/surface du fond noir, vu par le détecteur, est de 50 %.

Au contraire, dans le cas du dispositif selon le brevet précité n° 2.109.406, c'est la surface intérieure à un cercle de 23 mm qui est explorée, cette surface étant déterminée par deux diaphragmes qui limitent et rendent plus constante la longueur de fil visée (qui, autrement, serait variable, ce qui fausserait les mesures). Dans ce cas, le rapport surface du fil/surface du fond noir n'est plus que de 4,35 % (au lieu de 50 % dans le cas du mode de réalisation de la figure 1 annexée), ce qui correspond à un rendement optique très faible, qui résulte de la seule utilisation des rayons parallèles à l'axe optique.

Par contre, comme indiqué dans le préambule, le système de la figure 1 présente en principe l'inconvénient d'être sensible à la position du fil dans le sens de la profondeur (c'est-à-dire lorsque la distance du fil au miroir 6 et donc au miroir 8 varie). Toutefois, le calcul montre qu'un écart de 5 mm en avant ou en arrière conduit à une variation relative de la surface de fil 1 explorée par le détecteur 11 inférieure à 2 %, ce qui entraîne donc une variation du flux infrarouge et donc du signal électrique débité par le détecteur 11 du même ordre. Egalement comme indiqué dans le préambule, les inconvénients de cette variation sont réduits du fait que le fil oscille autour d'une position d'équilibre et que l'électronique qui suit le détecteur 11 (comme expliqué ci-après) fournit une réponse statistique qui élimine les fluctuations, grâce à un circuit intégrateur. C'est en fait la position moyenne du fil 1 par rapport au fond noir 2 qui importe.

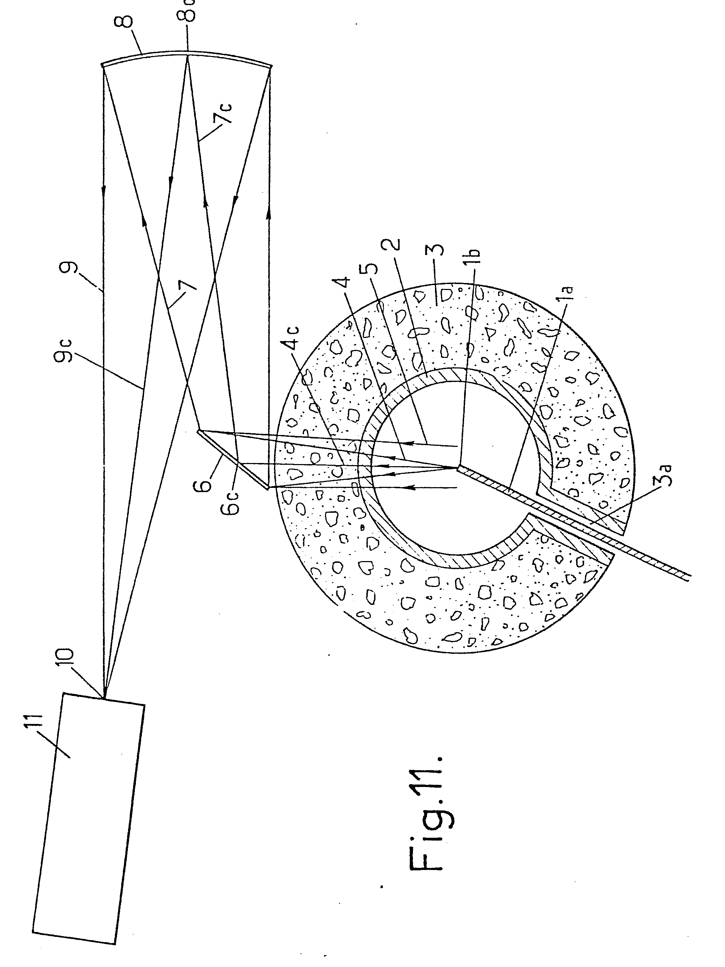

Référence est maintenant faite à la figure 11 (sur laquelle on retrouve les références de la figure 1) où l'on a représenté en 1a la tôle qui se déplace grâce à une fente étroite 3a usinée dans le corps noir 2 et l'enveloppe cylindrique 3. L'ensemble des rayons infrarouges 4 émis par le bord 1b de la tôle 1a comme dans le cas du fil, avec les rayons infrarouges émis par le corps noir 2, sont renvoyés pendant certaines périodes de temps, par le miroir oscillant 6 en tant que rayon 7 sur le miroir sphérique 8. Le plan de la tôle 1a fait un certain angle avec le rayon axial 4c de façon à éviter que des rayons extérieurs, passant par la fente 3a, parviennent à l'élément sensible 10.

Jusqu'à présent, on n'a pas indiqué pourquoi le miroir 6 était un miroir oscillant. On provoque les oscillations du miroir 6 afin d'envoyer sur le détecteur 10 alternativement un flux infrarouge qui comprend les rayons 4 émis par le fil 1 en même temps que les rayons 5 émis par le fond noir, d'une part, et uniquement les rayons 5 émis par le fond noir, d'autre part. On comprend alors que si l'on effectue la différence entre le premier rayonnement, d'une part, et le second rayonnement, d'autre part, on obtient un signal qui est égal à zéro lorsque le fil 1 se trouve à la même température que le corps noir 2 et qui est positif ou négatif, suivant que la température du fil 1 est supérieure ou bien inférieure à celle du fond noir 2 (suivant la polarité, on peut avoir une telle réponse ou bien la réponse inverse, en fonction de la différence de température entre le fil 1 et le corps noir 2).

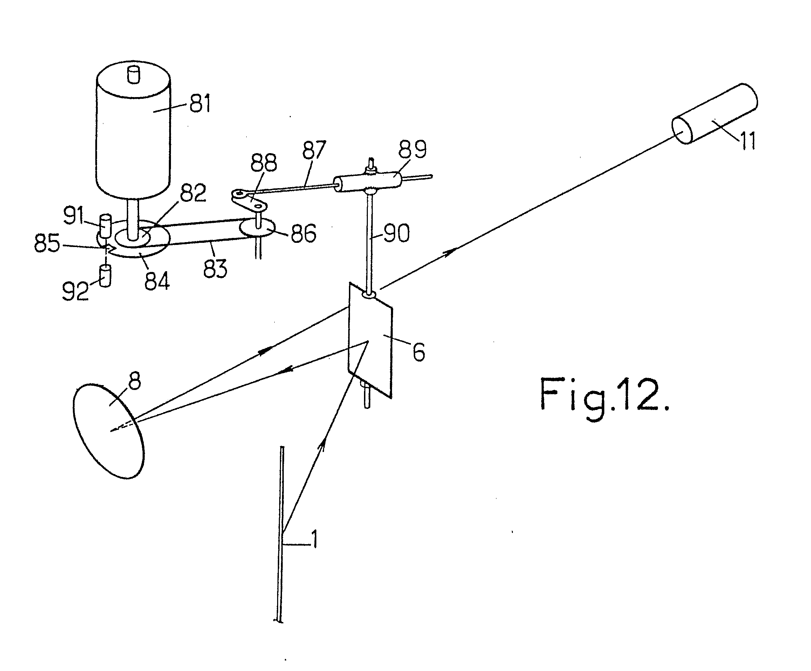

Sur la figure 12, on a représenté schématiquement le dispositif mécanique permettant de réaliser l'oscillation du miroir plan 6, en même temps que le signal du synchronisme. Un moteur et réducteur 81 entraîne en même temps une poulie 82 avec sa courroie crantée 83 et un disque 84 à fente 85. La courroie crantée 83 entraîne une autre poulie 86 solidaire d'un système bielle 87 manivelle 88, dont la bielle 87 coulisse dans un manchon 89 pouvant tourner autour d'un axe 90 fixe dans l'espace. Cet axe 90 est solidaire du miroir plan 6, qui oscille

0014624

du fait du mouvement de la bielle 87 avec une amplitude réglable en modifiant la longueur du bras de manivelle 88. Sur la figure 12, on retrouve les éléments 1, 8 et 11 de la figure 1. Le disque 84 à fente 85 passe sous un détecteur optoélectronique 91 qui déterte le passage de la fente 85 grâce à la source de lumière 92 dont les rayons atteignent alors le détecteur 91. En changeant la position angulaire du disque 84 à fente par rapport à la poulie d'entraînement 82, on modifie la position de la détection synchrone.

On voit donc que la partie électronique qui n'est pas illustrée sur la figure 1 doit assurer une grande sensibilité de la mesure autour de la détection du zéro, lorsque le fil 1 et le fond noir 2 se trouvent à la même température. Il en résulte donc que le bruit émis par le détecteur 11 e⁺ celui émis par le préamplificateur dans lequel débite le détecteur et qui peut être incorporé dans le détecteur ou placé contre celui-ci, à la manière connue, revêt une très grande importance.

Conformément à une caractéristique de l'invention, on prévoit des moyens pour rendre symétrique la tension issue du détecteur 11 par rapport au potentiel de référence, et ceci en particulier au moyen d'une liaison capacitive de haute impédance. On détecte ensuite la crête positive et la crête négative, l'une correspondant au cas où le fil est plus chaud que le fond noir et l'autre au cas inverse, puis on détecte les tensions de crête positive et négative autour de la "détection zéro" et on fait enfin la somme algébrique des tensions de crête positive et négative.

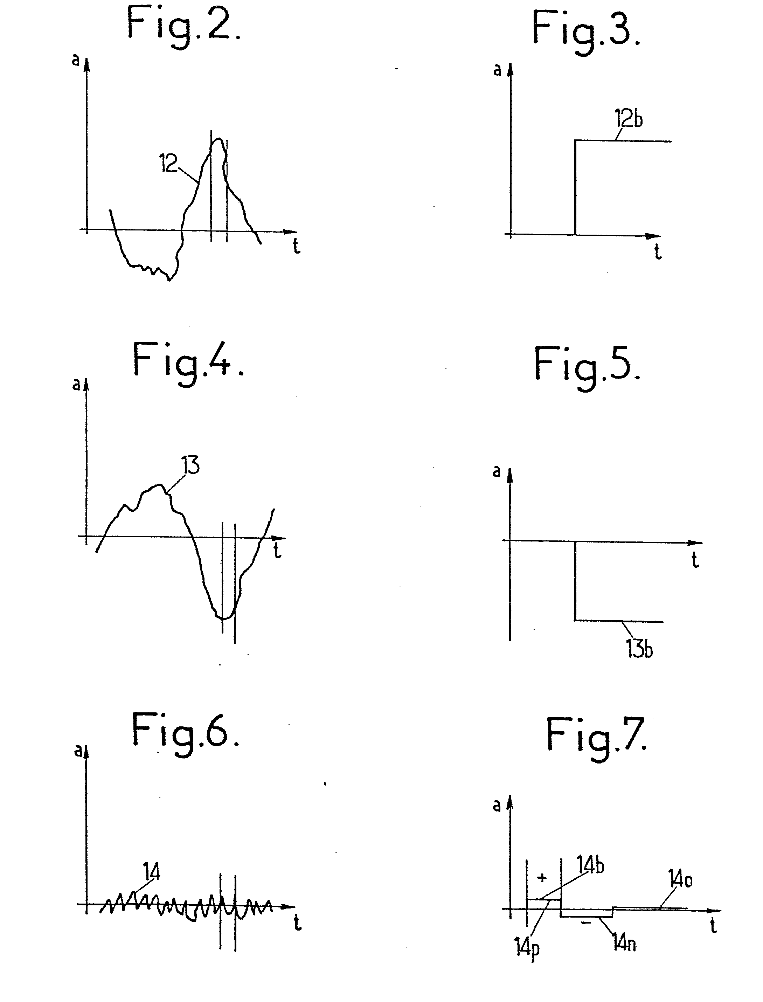

Sur les figures 2 à 7, on a illustré les différents signaux correspondants.

On obtient ainsi une tension positive détectée 12 qui est illustrée sur la figure 2 sur laquelle on a porté les amplitudes a en ordonnées et les temps t en abscisses.

Sur la figure 4, on a représenté, en utilisant les mêmes ordonnées a et abscisses t, la tension détectée négative 13.

Sur la figure 6, on a représenté, avec les mêmes ordonnées a et abscisses t, le signal 14 détecté autour du zéro et on voit que l'on obtient une très bonne sensibilité qui est par exemple de l'ordre de 0,5°C pour une température de fond noir de l'ordre de 70°C, ce qui veut dire que l'on peut repérer des variations d'un demi degré de la température du fil au-dessus ou au-dessous de la température du corps noir, lorsque celle-ci est de l'ordre de 70°C.

Les figures 3, 5 et 7 illustrent, avec les mêmes ordonnées a et abscisses t, les tensions positives 12b, négatives 13b et somme algébrique 14b correspondant aux signaux 12, 13 et 14 respectivement, après mise en mémoire. Sur la figure 7, on voit en particulier la partie positive 14p, la partie négative 14n et la partie 14c, qui constitue la somme algébrique de la partie positive 14p et de la partie négative 14n, du signal intégré, dans le cas où la température du fil est respectivement supérieure, inférieure ou sensiblement égale à celle du fond noir.

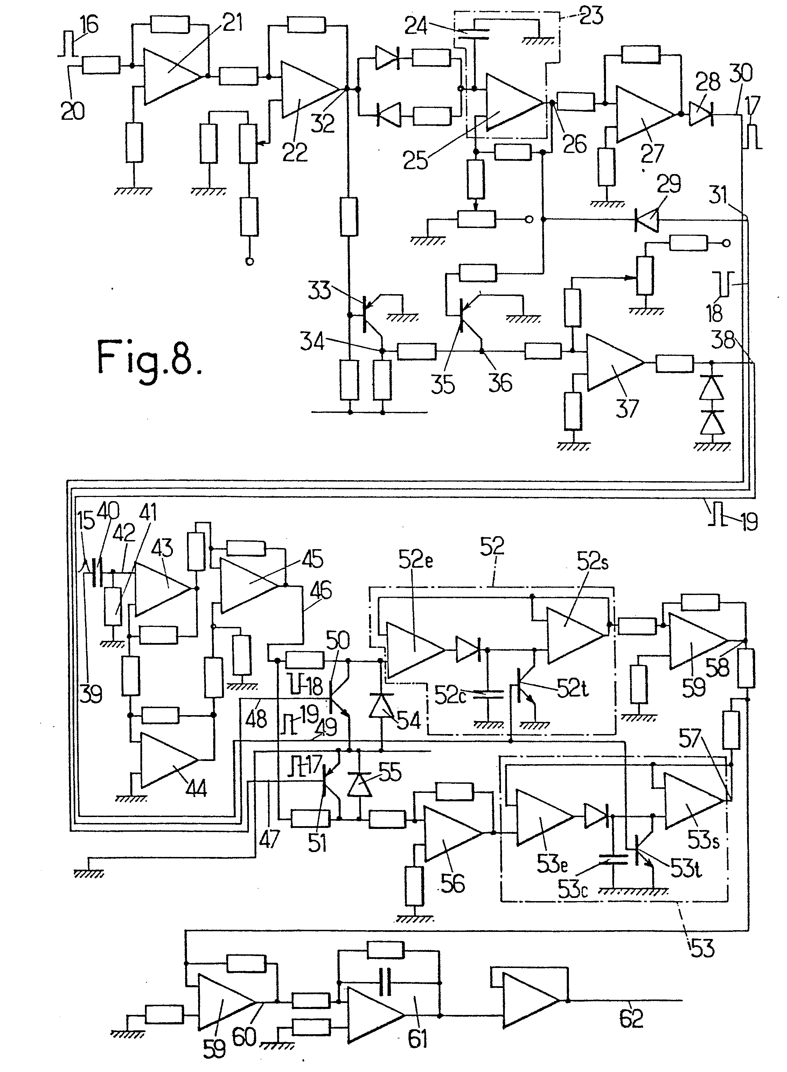

On va maintenant, avec référence aux figures 8, en ce qui concerne le montage électronique, et 9 et 10, en ce qui concerne les signaux, décrire le montage de la partie électronique selon un mode de réalisation préféré de l'invention.

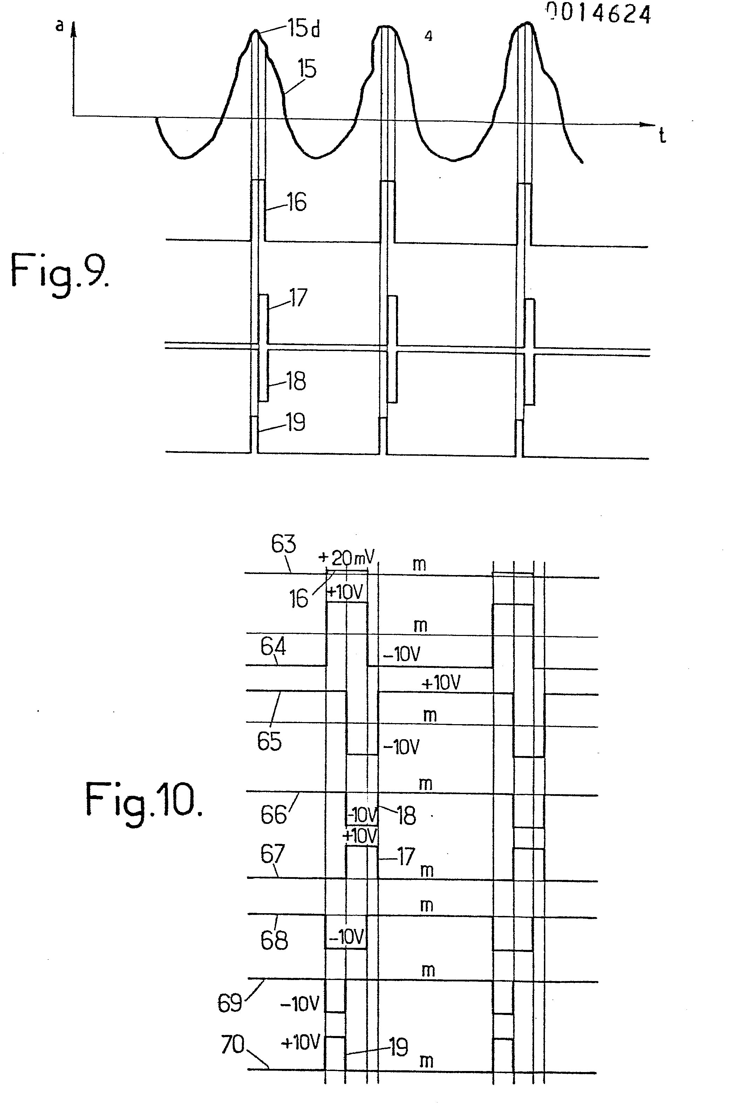

Nous commencerons d'abord par décrire la figure 9 pour mieux pouvoir suivre ensuite les fonctions des composants du dispositif de la figure 8.

Sur la figure 9, on a tout d'abord illustré le signal 15 qui est le signal de sortie du détecteur 12 et qui représente donc, dans le système de coordonnées a et t, la différence entre la température du fil 1 et la température du corps noir 2.

En synchronisme avec les oscillations du miroir 6 tourne le disque 84 à fente 85 (figure 12) qui, lorsque cette fente laisse passer le faisceau lumineux de la source 92 vers le détecteur photoélectronique 91, fournit une impulsion électrique 16 qui est synchronisée avec le signal 15. Cela signifie qu'à chaque pic 15d du signal 15 correspond une impulsion 16. Par des moyens qui seront

0014624

décrits ci-après avec référence à la figure 8, on obtient, à partir de chaque impulsion 16, deux impulsions symétriques 17 et 18, l'une positive et l'autre négative, de largeur déterminée (inférieure à celle d'une impulsion 16) et dont les fronts avant sont retardés par rapport au front avant de l'impulsion 16 correspondante. En outre, toujours à partir de la série d'impulsions 16, on obtient une série d'impulsions 19 dont chacune précède la paire correspondante d'impulsions 17, 18.

Référence est faite maintenant à la figure 8 montrant le schéma électronique d'ensemble. Le signal de sortie du détecteur photoélectronique qui reçoit le faisceau lumineux ayant traversé la fente du disque précité, c'est-à-dire la succession d'impulsions 16, est appliqué sur l'entrée 20 du circuit de la figure 8. Les impulsions 16 sont amplifiées par les deux amplificateurs opérationnels 21, 22 montés en cascade, ces impulsions, disponibles sur la sortie 32, sont retardées par le circuit 23 comportant un condensateur 24 et un amplificateur opérationnel 25, ledit condensateur réalisant le décalage de ces impulsions entre l'entrée et la sortie du circuit 23 par un effet de déphasage. La sortie 26 du circuit 23 est connectée, d'une part à travers l'amplificateur opérationnel 27 monté en inverseur, à la diode 28 montée en direct et, d'autre part directement, à la diode 29 montée en inverse. On obtient ainsi sur la sortie 30 la série d'impulsions positives 17 et sur la sortie 31 la succession d'impulsions négatives 18 (symétriques des impulsions 17), ces paires d'impulsions 17, 18 étant retardées (du fait du condensateur 24) par rapport aux impulsions 16 d'entrée.

Par ailleurs, les impulsions de sortie de l'amplificateur 22, prélevées en 32, sont appliquées à la base d'un transistor 33 du type PNP ; on obtient sur le collecteur de ce transistor 33 une tension négative lorsque ce transistor n'est plus passant, c'est-à-dire lorsque sa base est rendue négative par la sortie 32. On obtient donc sur le collecteur du transistor 33, en 34, une impulsion négative pour chaque impulsion positive 16. La durée des

13

0014624

impulsions apparaissant en 34 est diminuée par le transistor 35 grâce à la liaison de la base du transistor 35 à la sortie 26 du circuit 23. Quand la sortie 26 émet une impulsion (qui deviendra une paire d'impulsions positive 17 et négative 18), il apparaît une tension négative qui rend passant le transistor 35 et met donc à la masse le collecteur de ce transistor, ce qui supprime la portion de l'impulsion disponible en 34 pendant la durée des impulsions 17 et 18. Ceci apparaît clairement sur la figure 9 sur laquelle on voit que l'impulsion 19 correspond à la partie de l'impulsion 16 qui ne correspond pas à la paire d'impulsions 17, 18. En fait, en 36, on a non pas des impulsions positives, comme illustré sur la figure 9, mais des impulsions négatives, comme indiqué précédemment, et c'est l'amplificateur opérationnel 37 qui réalise une inversion de polarité du fait de son montage, les impulsions 19 étant effectivement disponibles en 38.

On voit donc que la moitié supérieure du montage de la figure 8 permet d'obtenir en 30, 31 et 38 respectivement les successions d'impulsions 17, 18 et 19 à partir de la succession d'impulsions 16 appliquée sur l'entrée 20.

Sur la moitié inférieure de la figure 19, la sortie du détecteur infrarouge 11, à savoir le signal 15d, est appliquée sur l'entrée 39. L'ensemble du condensateur 40 et de la résistance 41 forme une entrée à haute impédance qui a pour effet de rendre symétrique par rapport à la masse le signal 15 tout en le déformant le moins possible. Le signal symétrique disponible en 42 est appliqué à un amplificateur instrumental, à très haute impédance d'entrée, constitué par les amplificateurs opérationnels 43, 44 et 45. A la sortie, en 46, on obtient un signal qui va être maintenant traité comme exposé ci-après avec mise en oeuvre des impulsions 17, 18 et 19 disponibles en 47, 48 et 49 respectivement.

Les transistors 50 et 51 sont toujours passants, sauf au moment où les impulsions 18 (arrivant en 48) et 17 (arrivant en 47) sont appliquées sur leur base. De ce fait, le signal 15 modifié arrivant en 46 est arrêté par ces transistors 50 et 51, sauf pendant la durée des impulsions 17 et 18. Le circuit comporte ensuite deux circuits bloqueurs 52 et 53 comportant chacun deux amplificateurs opérationnels dont l'amplificateur opérationnel d'entrée 52e,
53e amplifie en courant l'impulsion d'entrée pour charger
les condensateurs 52c, 53c respectivement, tandis que l'amplificateur opérationnel de sortie 52s et 53s prélève sur
le condensateur 52c ou 53c respectivement un courant très
faible pour fournir une tension continue de sortie égale à
la tension d'impulsion d'entrée.

Les circuits bloqueurs 52 et 53 sont alimentés respectivement par les parties positives et négatives du signal
46 du fait des diodes 54 et 55 ; les parties positives passent dans le circuit bloqueur 52, tandis que les parties
négatives, après inversion de polarité dans l'amplificateur
opérationnel 56, passent dans le circuit bloqueur 53. Il en
résulte que le signal stocké dans les condensateurs 52c et
53c est toujours positif.

L'information sort finalement sous forme d'une tension continue des circuits bloqueurs 52 et 53 et est utilisée soit directement en 57, soit en 58, après inversion
dans l'amplificateur opérationnel 59. Le signal positif disponible en 57 et le signal négatif disponible en 58 sont additionnés et appliqués à l'amplificateur opérationnel 59.

Il faut bien entendu que les condensateurs 52c et
53c aient été préalablement déchargés, et ceci est réalisé
au moyen des impulsions 19 disponibles en 49 et qui sont
appliquées sur les bases des transistors 52t et 53t des circuits bloqueurs 52 et 53 respectivement ; lorsque ces transistors 18 et 19 sont rendus passants par les impulsions 19,
les condensateurs correspondants 52c et 53c se déchargent à
la masse à travers les circuits émetteurs-collecteurs de
ces transistors.

Par conséquent, s'il apparaît en 39, et donc en 46,
une tension positive à l'instant d'une impulsion 18, jouant
le rôle de fenêtre, elle est stockée positive dans le condensateur 52c et elle apparaîtra sous la forme d'une tension
continue négative à la sortie 60 de l'amplificateur opérationnel mélangeur 59 ; par contre, s'il apparaît en 39, et
donc en 46, une tension négative pendant l'impulsion 17,
jouant également le rôle de fenêtre, elle est stockée positive dans le condensateur 53c et apparaît sous la forme d'une tension continue négative à la sortie 60 ; enfin s'il apparaît en 39, et donc en 46, une tension à la fois positive et négative (c'est le cas du bruit), cette tension sera stockée à la fois dans les condensateurs 52c et 53c et elle apparaîtra en 60 sous la forme de la différence entre ces tensions négative et positive, différence qui sera elle-même soit positive, soit négative. En définitive, on voit que la succession de signaux 16 qui est engendrée par la fente du disque non représenté, en synchronisme avec le signal 15 du détecteur, sert à produire les impulsions 19 constituant des fenêtres, qui déchargent les condensateurs 52c et 53c; après cette décharge, les fenêtres 17 et 18 permettent le stockage dans ces mêmes condensateurs du signal 15 préalablement traité et l'apparition d'une tension continue sur la sortie 60  Cette tension est positive ou négative, suivant la polarité du signal 15 et donc suivant que le fil 1 est plus chaud ou plus froid que le fond 2, étant entendu que l'amplitude de cette tension continue varie dans le même sens que la différence de température. On a vu par ailleurs que l'influence du bruit tend à être éliminée. La tension continue positive ou négative apparaissant en 60 est renouvelée avec chaque groupe d'impulsions 17, 18 et 19, la cadence pouvant être par exemple de dix répétitions par seconde.

Il y a lieu de noter que ce signal continu peut provenir d'une petite zone positive ou négative du signal de détecteur infrarouge ou de la somme algébrique de deux zones positive et négative, si le bruit produit une information d'amplitude couvrant l'axe zéro de la masse. Cette disposition permet une grande finesse de réponse dans la zone la plus intéressante, celle où la température du fil est proche de celle du corps noir. La tension disponible en 60 passe ensuite dans un filtre passe-bas 61 afin d'éliminer certaines variations aléatoires et rapides, la constante de temps de ces filtres pouvant être de l'ordre de 0,5 seconde. C'est finalement en 62 que l'on obtient une tension continue positive et négative qui est le signal représentatif de la différence entre la température du fil et celle du fond noir.

Sur la figure 10, on a représenté enfin, à une échelle agrandie et avec indication (en volts V ou millivolts mV) des polarités données à titre d'exemple (le potentiel de la masse étant indiqué par le niveau m), différents signaux, à savoir :
- le signal 63 qui sort du détecteur photoélectrique coopérant avec le disque à fente qui est actionné en synchronisme avec le miroir oscillant 6 pour constituer un dispositif de synchronisation, ce signal 63 comportant les impulsions 16 de la figure 9, qui arrivent en 20 (fig.8),
- le signal 64 disponible en 32,
- le signal 65 disponible en 26,

0014624

- le signal 66, avec les impulsions 18, disponibles en 31 et 48,

- le signal 67, avec les impulsions 17, disponible en 30 et 47,

- le signal 68 disponible en 34,

- le signal 69 disponible en 36,

- et enfin le signal 70, avec les impulsions 19, disponible en 38 et 49.

On voit que les modes de réalisation décrits permettent de réaliser des mesures très précises de la température d'un fil ou d'une tôle par rapport à un fond noir à température constante, même lorsque ce fil ou cette tôle oscille devant le fond noir et même lorsque la différence de température est très faible, par exemple inférieure à 1°, entre le fil et le fond noir.

Toutefois la mise en oeuvre d'un miroir oscillant présente un certain nombre d'inconvénients :

- le réglage de l'axe de visée doit être très précis,

- le déplacement transversal du corps produit des variations de fréquence du signal de sortie de l'élément sensible,

- le rapport "dimension de la fenêtre optique de visée/distance entre cette fenêtre et le corps" doit être maintenu faible et il y a donc lieu d'accroître la dimension du fond noir lorsque le diamètre du corps vu par le miroir plan augmente,

- la sensibilité diminue si le diamètre précité diminue.

Il en résulte donc des problèmes lorsque le diamètre du corps est trop grand ou trop petit et/ou lorsque ce corps subit des déplacements transversaux par rapport au fond noir.

Pour éviter ces inconvénients on peut réaliser un dispositif selon l'invention en effectuant le renvoi des rayonnements infrarouges, non pas au moyen d'un seul miroir plan oscillant, mais avec deux miroirs plans fixes et la collection des rayonnements infrarouges, non pas au moyen d'un seul miroir sphérique concave, mais avec deux miroirs sphériques concaves, chaque miroir sphérique étant associé à un miroir plan, en combinaison avec des moyens pour intercepter
alternativement et successivement, d'une part, le rayonnement infrarouge total émis ou réfléchi par une portion de
longueur dudit corps et émis par une zone du fond noir qui
entoure ladite portion et réfléchi par un desdits miroirs
plans fixes et par un desdits miroirs concaves, et, d'autre
part, le rayonnement infrarouge total émis uniquement par
ladite zone, ou une zone équivalente, dudit fond noir, sans
intervention dudit corps, et réfléchi par l'autre miroir
plan et l'autre miroir sphérique.

On réalise alors (figures 13 à 17) l'exploration du
rayonnement émis, d'une part, par le corps allongé (notamment par un fil, barre ou tube dans le mode de réalisation
illustré) et, d'autre part, par le fond noir, non plus au
moyen d'un miroir plan oscillant et d'un miroir sphérique
concave (comme dans les modes de réalisation des figures 1 à
11), mais par mise en oeuvre de deux visées fixes utilisant
chacune un miroir plan fixe et un miroir sphérique concave,
disposés de manière que les parties utilisées du rayonnement
émis tant par le fil, barre ou tube que par le fond noir
soient renvoyées par le miroir plan et collectées par le miroir concave de chaque visée vers la même zone sensible d'un
détecteur, et ceci sous le même angle, des moyens étant prévus pour obturer alternativement et successivement les rayonnements constituant chacune des deux visées.

Ce mode de réalisation s'applique en particulier à la
mesure de la température de barres ou tubes.

Plus particulièrement, en se référant à la figure 13, le rayonnement infrarouge 4 du corps 1 est renvoyé par un miroir plan
fixe 6a sur un miroir sphérique concave 8a qui collecte tout
le rayonnement infrarouge renvoyé par le miroir plan 6a et
le concentre sur la zone sensible 10 d'un détecteur 11.

Le fond noir 2a est constitué, dans le mode de réalisation illustré, par des plaques de cuivre recouvertes de graphite colloïdal de
pouvoir émissif élevé, le cuivre ayant l'avantage d'avoir une bonne conductibilité thermique. Ce fond noir est chauffé par des résistances
électriques 101 noyées dans une enveloppe isolante cylindrique 3a (en
fibres de verre par exemple). Un détecteur de température 102
(tel qu'une sonde à résistance ou un couple thermoélectrique), dont les fils de sortie sont représentés en 103, permet de réguler, au moyen d'un thermostat (non représenté), la température des résistances 101 et donc du corps noir 2a.

Dans ce mode de réalisation on a donné au fond noir 2a une section rectangulaire pour en faciliter la construction et pour réaliser la visée d'une portion 104 du fond noir sur une surface plane et donc sous un angle constant.

La visée de la portion ou zone 104 est réalisée grâce à un miroir plan 6b qui renvoie le rayonnement infrarouge 5 émis par cette zone 104 sur un miroir sphérique concave 8b qui collecte tout le rayonnement infrarouge, renvoyé par le miroir 6b et provenant de la zone 104, sur la même zone sensible 10 du détecteur 11, les rayonnements en provenance des miroirs concaves 8a et 8b atteignant sous le même angle la zone sensible 10. On s'arrange également pour que le chemin optique soit le même pour le rayonnement infrarouge en provenance de la zone 104 et pour le rayonnement infrarouge en provenance du fil 1.

Une telle disposition conduit à un double décalage de l'axe optique, un décalage étant réglé par les miroirs plans 6a et 6b et l'autre par les miroirs concaves 8a et 8b.

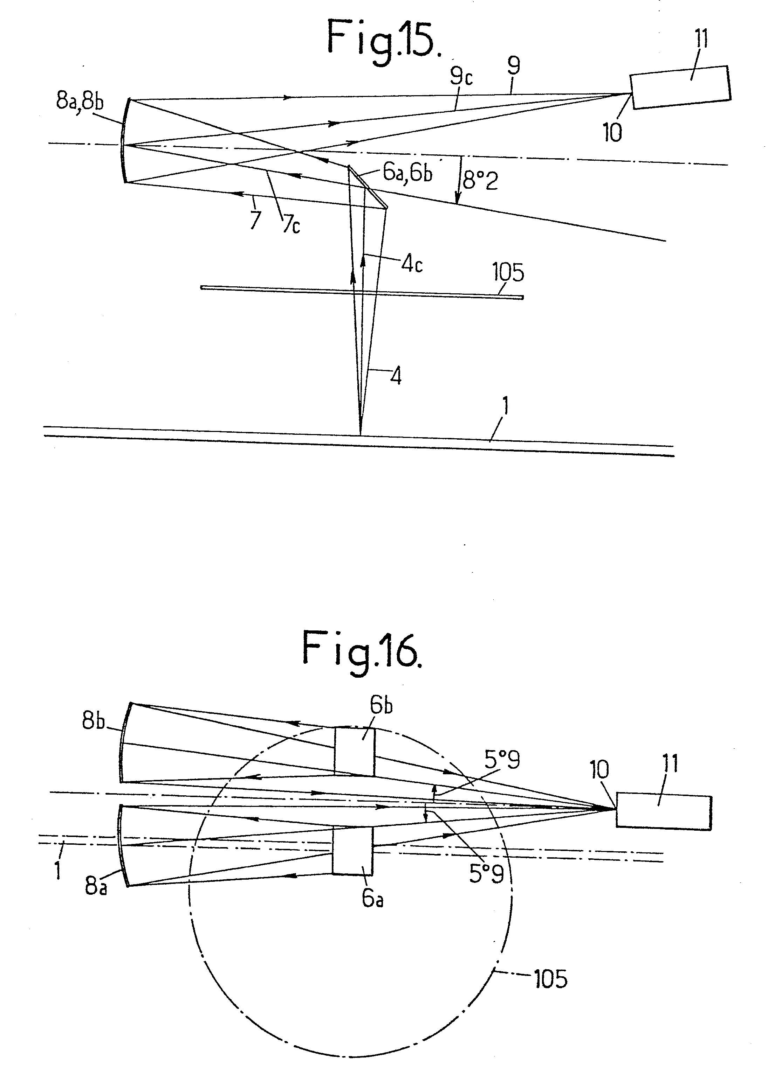

En se référant maintenant également aux figures 15 et 16, correspondant respectivement par exemple à une vue suivant un plan vertical (par devant) et une vue suivant un plan horizontal (par-dessus) respectivement, on voit que, si la visée sur le fil 1 est effectuée verticalement, les miroirs plans 6a et 6b contrôlent le décalage des rayons infrarouges dans un plan vertical, tandis que les miroirs concaves 8a et 8b réalisent ce décalage dans le plan horizontal. Dans un exemple particulier non limitatif, les miroirs 8a et 8b sont des miroirs sphériques ayant une focale de 110 mm et une ouverture de 40 mm, la distance entre le fil 1 et le centre du miroir plan 6a étant de 110 mm et la distance entre les centres du miroir plan 6a et du miroir sphérique 8a étant également de 110 mm.

Sur la figure 14 on a porté les références des rayonnements 7 et 9 renvoyés par les miroirs plans, d'une part, et les miroirs sphériques, d'autre part, ainsi que les rayons centraux 4c, 7c et 9c correspondant aux rayonnements 4, 7 et 9, à savoir les mêmes références qu'aux figures 1 et 11.

L'inclinaison dans le plan vertical, qui est contrôlée par les miroirs plans 6a et 6b, est alors de 8°2, tandis que l'inclinaison dans le plan horizontal, qui est contrôlée par les miroirs sphériques 8a et 8b, est de 5°9 pour les deux miroirs. Enfin l'angle solide sous lequel est vu le fil 1 est de $6,28 \times 10^{-4}$ stéradiant.

On a porté sur les figures 15 et 16 les angles d'inclinaison dans le plan vertical et dans le plan horizontal.

Le dispositif qui vient d'être décrit comprend des moyens illustrés sur les figures 13 et 14 permettant d'obturer alternativement et successivement le rayonnement infrarouge 4 en provenance du fil 1 et le rayonnement infrarouge 5 en provenance du fond noir. A titre d'exemple ces moyens sont constitués par un disque 105, illustré en plan sur la figure 14, qui est entraîné en rotation à vitesse constante par un moteur 100.

Ce disque comporte :

- d'une part, deux ouvertures 106 limitées par deux diamètres orthogonaux 107 et par quatre quarts de cercle 108 et 109;

- d'autre part, deux évidements 110 limités également par les diamètres orthogonaux 107 et par deux quarts de cercle 111 et 112.

Les ouvertures 106 coopèrent avec une fenêtre 113 ménagée dans le corps noir 2a et l'enveloppe isolante 3a, de manière à laisser passer, lorsque l'une d'elles se trouve au niveau de cette fenêtre 113, le rayonnement infrarouge 4 émis par le corps ou fil 1 vers le miroir plan 6a et donc vers l'élément sensible 10 du détecteur 11 après collection par le miroir concave 8a.

De même les ouvertures ou évidements 110 coopèrent avec une fenêtre analogue 114 qui est traversée par le rayonnement infrarouge 5 émis par la zone 104 pour laisser passer ce rayonnement vers le miroir plan 6b puis vers le miroir concave de collection 8b pour qu'il atteigne l'élément sensible 10 lorsqu'un de ces évidements se trouve en regard de la fenêtre 114.

Grâce aux fenêtres 113 et 114 et aux ouvertures 106 et

0014624

110 qui se succèdent alternativement (du fait qu'elles sont limitées par les mêmes diamètres 107), on voit que l'élément sensible 10 reçoit, après renvoi par les miroirs plans 6a et 6b, et collection par les miroirs concaves 8a et 8b, alternativement et successivement, et sous le même angle, les rayonnements infrarouges en provenance du fil 1 et en provenance du corps noir (zone 104).

Le détecteur 11 est avantageusement un détecteur pyroélectrique sensible à tout le rayonnement infrarouge émis par le fil ou autre corps 1 et le fond noir (zone 104) à toutes les températures, notamment par exemple aux environs de 150°C.

La détection finale, dans le mode de réalisation à deux miroirs plans fixes et deux miroirs sphériques concaves, se fait par exemple comme ci-dessus avec référence aux figures 2 à 10, c'est-à-dire par détection synchrone. Etant donné que la fréquence du rayonnement est stable, car les visées sont fixes sans mettre en oeuvre de miroir oscillant, on peut réaliser une excellente détection synchrone.

On remarquera que l'on peut mettre en oeuvre, avec le dispositif des figures 13 à 17, le même système électronique qu'avec les dispositifs des figures 1, 11 et 12, pour les raisons suivantes :

- dans le système avec un miroir oscillant (figures 1, 11 et 12), on passe progressivement, grâce à l'oscillation du miroir, de la visée du fil à celle du fond noir et réciproquement;

- dans le dispositif avec deux paires de miroirs fixes (figures 13 à 17), on passe également progressivement de la visée du fil à celle du fond noir et réciproquement, car, lorsque les ouvertures 106 viennent progressivement découvrir la fenêtre 113, les zones opaques 115 viennent progressivement remplacer les ouvertures 110; de ce fait le rayonnement en provenance du corps 1 vient remplacer progressivement le rayonnement en provenance de la zone 104 sur l'élément sensible 10 du détecteur; il y a donc passage graduel d'un rayonnement à l'autre; de même, lorsque les ouvertures 110 viennent se substituer aux zones 115 opaques devant la fenêtre 114, le rayonnement infrarouge en provenance de la zone 104 vient progressivement se substituer au rayonnement infrarouge en provenance du fil 1 sur la zone sensible 10 du détecteur 11.

On notera que cette zone sensible 10 reçoit également le rayonnement renvoyé par les zones opaques 115 et 116. Pour ne pas perturber la mesure, il est nécessaire que ces zones soient à la même température et à cet effet on réalise le disque 105 en une matière conductrice de la chaleur de manière que sa température soit uniforme. On peut réaliser par exemple le disque 105 en cuivre.

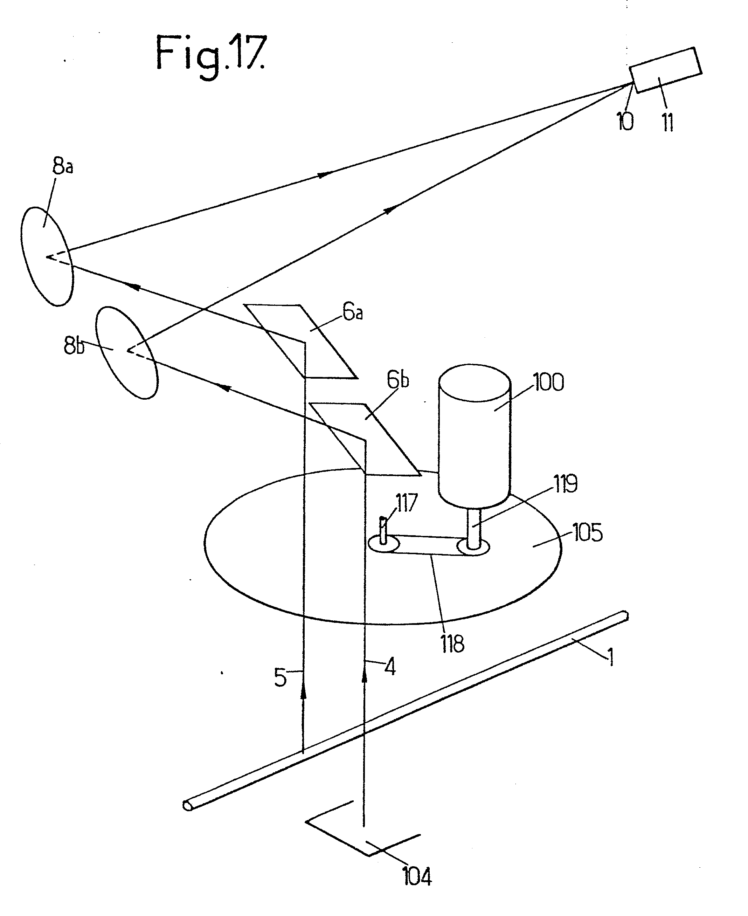

Sur la figure 17 on a représenté schématiquement dans l'espace l'ensemble du dispositif à deux paires de miroirs fixes avec une réalisation pratique de l'entraînement du disque 105 au moyen d'un moteur 100 qui entraîne l'axe 117 du disque non pas directement mais au moyen d'un dispositif à courroie 118, l'axe 119 du moteur 100 étant décalé par rapport à l'axe 117, ce qui permet de disposer sans problème, d'une part, le moteur 100 et, d'autre part, les miroirs plans 6a et 6b.

Comme indiqué précédemment, le dispositif selon les figures 13 à 17 présente un certain nombre d'avantages par rapport aux dispositifs selon les figures 1, 11 et 12, notamment l'amélioration de la sensibilité, la facilité du réglage, la possibilité de mesurer la température du corps, tels que tubes et barres, présentant même une section relativement importante, sans nécessiter la mise en oeuvre d'un fond noir de grande dimension, et enfin la mise en oeuvre, dans les meilleures conditions, d'une détection synchrone du fait de la stabilité de la fréquence du rayonnement infrarouge détecté. Toutefois les dispositifs des figures 1, 11 et 12 conviennent également pour certaines dimensions de fil ou tôle.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

0014624

## REVENDICATIONS

1. Procédé pour la mesure, par thermométrie infrarouge, de la température d'un corps présentant, au moins dans une direction, une dimension faible, tel qu'un fil, barre ou tube ou une tôle même en mouvement suivant sa longueur, devant un fond noir, notamment la différence entre la température de ce corps et celle du fond noir, ledit procédé consistant à envoyer sur l'élément sensible d'un détecteur infrarouge, alternativement et successivement, d'une part, au moins une partie du rayonnement infrarouge total émis ou réfléchi par une portion de longueur dudit corps et émis par une zone du fond noir qui entoure ladite portion, et, d'autre part, au moins une partie correspondante du rayonnement infrarouge total émis uniquement par ladite zone, ou une zone équivalente, dudit fond noir, sans intervention dudit corps, et à mesurer la différence d'intensité entre ces deux parties en mesurant la différence entre les signaux de sortie correspondants dudit élément sensible, et étant caractérisé en ce que l'on collecte sur ledit élément sensible sensiblement le rayonnement infrarouge total émis ou réfléchi dans un angle solide déterminé par ladite portion dudit corps et ladite zone du fond, et, alternativement et successivement, sensiblement le rayonnement infrarouge total émis dans un même angle solide uniquement par ladite zone, ou une zone équivalente dudit fond noir, sans intervention dudit corps.

2. Procédé selon la revendication 1, caractérisé en ce qu'on réalise l'envoi des rayonnements infrarouges totaux, d'une manière alternative et successive, au moyen d'un miroir plan oscillant et la collecte de ces rayonnements au moyen d'un miroir sphérique concave fixe.

3. Procédé selon la revendication 1, caractérisé en ce qu'on réalise le renvoi des rayonnements infrarouges au moyen de deux miroirs plans fixes et la collection des rayonnements infrarouges, renvoyés par les miroirs plans, au moyen de deux miroirs sphériques concaves, chaque miroir sphérique étant associé à un miroir plan, et on interrompt alternativement et successivement, d'une part, le rayonnement infrarouge total émis ou réfléchi par une portion de longueur dudit corps et émis par une zone du fond noir qui entoure ladite portion et réfléchi par un desdits miroirs plans fixes et par un desdits miroirs concaves, et, d'autre part, le rayonnement infrarouge total émis uniquement par ladite zone, ou une zone équivalente, dudit fond noir, sans intervention dudit corps, et réfléchi par l'autre miroir plan et l'autre miroir sphérique.

4. Procédé selon la revendication 1, 2 ou 3, caractérisé en ce qu'on traite le signal électrique de sortie dudit détecteur pour le rendre symétrique par rapport au potentiel de référence, on détecte séparément les valeurs de crête positives et négatives de ce signal ainsi rendu symétrique et on détermine la somme algébrique des valeurs de crête positives et négatives ainsi détectées.

5. Procédé selon la revendication 4, caractérisé en ce qu'on élabore des successions d'impulsions constituant chacune une fenêtre permettant de découper, dans ledit signal rendu symétrique, des tranches constituant des signaux de crête positifs et négatifs dont on effectue ensuite la somme algébrique.

6. Dispositif pour la mise en oeuvre du procédé selon la revendication 1, caractérisé en ce qu'il comprend -- en combinaison avec au moins un miroir plan apte à réfléchir, alternativement et successivement, d'une part, au moins une partie du rayonnement infrarouge total émis ou réfléchi par une portion de longueur dudit corps et émis par une zone du fond noir qui entoure ladite portion et, d'autre part, au moins une partie correspondante du rayonnement infrarouge total émis uniquement par ladite zone, ou une zone équivalente, dudit fond noir, sans intervention dudit corps, et avec des moyens aptes à mesurer la différence d'intensité entre ces deux parties en mesurant la différence entre les signaux de sortie correspondants dudit élément sensible -- des moyens pour collecter sur ledit élément sensible sensiblement le rayonnement infrarouge total émis ou réfléchi dans un angle solide déterminé par ladite portion dudit corps et ladite zone du fond et, alternativement et successivement, sensiblement le rayonnement infrarouge total émis dans un même angle solide uniquement par ladite zone ou une zone équivalente, dudit fond noir, sans intervention dudit corps.

7. Dispositif selon la revendication 6, pour la mise en oeuvre du procédé selon la revendication 2, caractérisé en ce que ledit au moins un miroir plan est constitué par un miroir plan oscillant et en ce que lesdits moyens pour collecter les rayonnements infrarouges sont constitués par un miroir sphérique concave.

8. Dispositif selon la revendication 6, pour la mise en oeuvre du procédé selon la revendication 3, caractérisé en ce que ledit au moins un miroir plan est constitué par deux miroirs plans fixes, en ce que lesdits moyens pour collecter les rayonnements infrarouges totaux sont constitués par deux miroirs sphériques concaves, chaque miroir sphérique concave étant associé à un miroir plan, et en ce qu'on prévoit des moyens pour intercepter alternativement et successivement, d'une part, le rayonnement infrarouge total émis ou réfléchi par une portion de longueur dudit corps et émis par une zone du fond noir qui entoure ladite portion, et réfléchi par un desdits miroirs plans fixes et par un desdits miroirs concaves, et, d'autre part, le rayonnement infrarouge total émis uniquement par ladite zone, ou une zone équivalente, dudit fond noir, sans intervention dudit corps, et réfléchi par l'autre miroir plan et l'autre miroir sphérique.

9. Dispositif selon l'une quelconque des revendications 6 à 8, caractérisé en ce que ledit détecteur est un détecteur pyroélectrique sensible à tout le rayonnement infrarouge émis, d'une part, par ledit corps et, d'autre part, par le fond noir, à toutes les températures.

10. Dispositif selon l'une quelconque des revendications 6 à 9, caractérisé en ce que le fond noir est constitué par des plaques de cuivre recouvertes de graphite colloïdal de pouvoir émissif élevé.

11. Dispositif selon l'une quelconque des revendications 6 à 10, caractérisé en ce que le fond noir a une section rectangulaire.

12. Dispositif selon l'une quelconque des revendications 6 à 11, caractérisé en ce que le fond noir est maintenu à la température désirée au moyen d'éléments chauffants et d'un système du type thermostat.

13. Dispositif selon l'une quelconque des revendications 9 à 12, caractérisé en ce que les miroirs plans et les miroirs sphériques concaves sont disposés pour que l'élément sensible du détecteur reçoive le rayonnement infrarouge dudit corps et le rayonnement infrarouge du fond noir sous le même angle et sensiblement suivant le même chemin optique.

14. Dispositif selon l'une quelconque des revendications 9 à 13, caractérisé en ce que lesdits moyens pour intercepter alternativement et successivement le rayonnement infrarouge provenant dudit corps et celui provenant dudit fond noir sont constitués par un disque, entraîné en rotation à vitesse constante, comportant des ouvertures successives dont la moitié laisse passer le rayonnement infrarouge émis par ledit corps et le fond qui l'entoure et l'autre le rayonnement infrarouge émis par la zone correspondante du fond noir, chaque moitié des ouvertures coopérant avec une fenêtre ménagée dans ledit corps noir pour laisser passer le rayonnement infrarouge.

15. Dispositif selon l'une quelconque des revendications 6 à 14, pour la mise en oeuvre du procédé selon la revendication 3, caractérisé en ce qu'il comprend, connectés à la sortie dudit détecteur, des moyens pour rendre symétrique par rapport au potentiel de référence le signal sortant dudit détecteur, des moyens pour détecter séparément les valeurs de crête positives et négatives du signal sortant des moyens cités en premier lieu, et des moyens pour déterminer la somme algébrique des sorties des moyens cités en deuxième lieu.

16. Dispositif selon la revendication 15, pour la mise en oeuvre du procédé selon l'ensemble des revendications 3 et 4, caractérisé en ce qu'il comprend des moyens pour engendrer une première succession d'impulsions synchrones aux crêtes du signal de sortie du détecteur, des moyens pour déduire, de ladite première succession d'impulsions, une deuxième succession de paires d'impulsions symétriques, les deux impulsions de chaque paire étant l'une positive et l'autre négative et ayant même amplitude et même durée, les fronts avant des impulsions de chaque paire étant retardés par rapport au front avant de l'impulsion correspondante de

0014624

la première succession, et des moyens pour déterminer les valeurs de crête positives et négatives dudit signal, rendu symétrique, uniquement pendant la durée desdites paires d'impulsions.

17. Dispositif selon la revendication 16, caractérisé en ce qu'il comprend des moyens pour déduire, de ladite première succession d'impulsions, une troisième succession d'impulsions qui précèdent chacune une paire d'impulsions correspondantes de ladite deuxième succession d'impulsions, des moyens de stockage aptes à stocker ledit signal symétrique débité par lesdits moyens pour rendre symétrique le signal dudit détecteur, des moyens aptes, en réponse à chaque impulsion de ladite troisième succession d'impulsions, à décharger lesdits moyens de stockage, et des moyens aptes à débiter le signal intégré dans lesdits moyens de stockage pendant la durée de chaque impulsion de ladite deuxième succession d'impulsions.

Fig.1.

2

# Fig.2.

# Fig.3.

# Fig.4.

# Fig.5.

# Fig.6.

# Fig.7.

Fig.8.

Fig.9.

Fig.10.

Fig.11.

6

Fig.12.

Fig.13.

Fig.14.

# Fig.15.

# Fig.16.

# Fig.17.

**Office européen des brevets**

## RAPPORT DE RECHERCHE EUROPEENNE

Numéro de la demande
EP 80 40 0114

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendica-tion concernee | |
| A,D | <u>FR - A - 2 109 406</u> (L.E.P.)<br>* En entier *<br><br>-- | 1,2,7 | G 01 J 5/00 |
| A | <u>US - A - 4 015 476</u> (J. ROCHE et al.)<br>* En entier *<br><br>-- | 1,2,6,7 | |
| A | <u>DE - A - 1 648 205</u> (FRAUNHOFER GES.)<br>* Pages 3,4; figures 1-3 *<br><br>-- | 4 | |
| A | <u>US - A - 3 766 781</u> (T. ROBERTS)<br>* Colonne 2; figure 1 *<br><br>---- | 4 | |

DOMAINES TECHNIQUES RECHERCHES (Int. Cl. )

G 01 J 5/00
5/52
5/62
1/16

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interference
D: document cité dans la demande
L: document cite pour d'autres raisons

&: membre de la même famille, document correspondant

Le présent rapport de recherche a été etabli pour toutes les revendications

| Lieu de la recherche | Date d'achevement de la recherche | Examinateur |
|---|---|---|
| La Haye | 20-04-1980 | BOEHM |

OEB Form 1503.1  06.78